# EUROPÄISCHE PATENTSCHRIFT

(11) **EP 0 627 832 B1**
(45) Veröffentlichungstag und Bekanntmachung des Hinweises auf die Patenterteilung: **26.03.2003**
(21) Anmeldenummer: 94105678.0
(22) Anmeldetag: 13.04.1994
(51) Int. Cl.: H04L 27/22, H04H 1/00

(54) **Demodulator für Radio-Daten-Signale**
Demodulator for RDS signals
Démodulateur pour signaux "RDS"

(30) Priorität: 04.06.1993 DE 4318641
(43) Veröffentlichungstag der Anmeldung: 07.12.1994
(73) Patentinhaber: Blaupunkt-Werke GmbH, D-31139 Hildesheim (DE)
(72) Erfinder: Hegeler, Wilhelm, D-31134 Hildesheim (DE)

(56) Entgegenhaltungen:
- EP-A- 0 195 989
- DE-A- 4 029 583

## Beschreibung

Die Erfindung geht aus von einem Demodulator und einem Demodulationsverfahren für Radio-Daten-Signale nach der Gattung der unabhängigen Patentansprüche.

Mit dem bekannten Radio-Daten-System können zusätzlich zu den Audiosignalen Datensignale übertragen werden, die beispielsweise den Namen des ausgestrahlten Programms oder andere Information enthalten. Um beim UKW-Stero-Hörrundfunk die Kompatibilität mit den Audiosignalen sowie mit Verkehrsfunksignalen sicherzustellen, wird bei dem Radio-Daten-System der auch beim Verkehrsfunk verwendete Träger von 57 kHz mit den zu übertragenden Daten moduliert, wobei allerdings die Seitenbänder außerhalb der für verschiedene Signale des Verkehrsfunks benutzten Modulationsfrequenzen liegen. Es wird dabei eine Biphase-Codierung gewählt, die bewirkt, daß sich keine Spektralanteile bei 57 kHz ergeben und der Takt implizit mitübertragen wird. Das gesamte Spektrum des modulierten Radio-Daten-Signals, im folgenden auch RDS-Signal genannt, wird auf ±2,4 kHz begrenzt.

Bei der zur Demodulation erforderlichen Regenerierung des Hilfsträgers sowie bei der Erkennung der Phasensprünge sollen Störungen des Radio-Daten-Signals möglichst nicht zu einem Fehler in der Demodulation führen. Dieses ist besonders schwierig, wenn außer dem Radio-Daten-Signal noch Verkehrsfunksignale übertragen werden.

Von wesentlichem Einfluß auf die Qualität der Demodulation ist eine einwandfreie Regenerierung des Bittaktes der Radio-Daten-Signale mit Hilfe einer Phasenregelschleife. Bei der Demodulation ist ferner zu berücksichtigen, daß außer den verschiedenen möglichen Empfangsstörungen auch Störungen durch das im Multiplexsignal häufig enthaltene Verkehrsfunksignal verursacht werden können.

EP-A-0 195 989 offenbart einen Demodulator für Radio-Daten-Signale, deren Übertragung durch Phasenumtastung eines unterdrückten Hilfsträgers erfolgt, wobei ein das hilfsträgerfrequente Signal enthaltendes Multiplexsignal über einen Bandpaß und einen Amplitudenbegrenzer geleitet wird.

Aufgabe der vorliegenden Erfindung ist es, einen Demodulator sowie ein Demodulationsverfahren für Radio-Daten-Signale mit einer vorteilhaften . Rückgewinnung des Bittaktes des Radio-Daten-Signals vorzuschlagen. Ferner besteht eine Aufgabe der Erfindung darin, einen Demodulator für Radio-Daten-Signale für empfangene Multiplexsignale sowohl ohne als auch mit Verkehrsfunksignalen auszulegen.

Der erfindungsgemäße Demodulator und das erfindungsgemäße Demodulationsverfahren sind dadurch gekennzeichnet, daß das amplitudenbegrenzte trägerfrequente Signal, gegebenenfalls unter weiterer Filterung, in digitale Abtastwerte umgewandelt wird und daß die Abtastwerte mindestens einer Phasenregelschleife zur Ableitung eines Bittaktsignals zuführbar sind.

Vorzugsweise ist bei dem erfindungsgemäßen Demodulator bzw. verfahren vorgesehen, daß die Umwandlung in Abtastwerte mit der Frequenz des Hilfsträgers erfolgt. Es ist jedoch auch grundsätzlich die Verwendung einer höheren Frequenz, beispielsweise dem Doppelten der Frequenz des Hilfsträgers, möglich.

Eine Weiterbildung des erfindungsgemäßen Demodulationsverfahrens besteht darin, daß in der Phasenregelschleife mit vierfacher Frequenz des Bittaktes der Radio-Daten-Signale Integrale der Abtastwerte innerhalb jeweils einer Halbwelle des Bittaktsignals gebildet werden und daß die entstehenden Integrale zur Steuerung eines das Bittaktsignal aus einer höheren Frequenz ableitenden Frequenzteilers verwendet werden.

Bei dieser Weiterbildung wird insbesondere eine günstige Regelkennlinie der Phasenschleife ohne die Verwendung von aufwendigen Multiplizierern dadurch erreicht, daß bei der Integration eine Annäherung an eine bezüglich des Bittaktsignals sinusförmige Bewertung durch eine sich über jeweils eine Halbwelle des Bittaktsignals ändernde zeitliche Dichte der zur Integration verwendeten Abtastwerte erfolgt.

Eine besonders vorteilhafte Regelkennlinie der Phasenregelschleife ergibt sich gemäß einer anderen Weiterbildung der Erfindung dadurch, daß aus zwei zeitlich aufeinanderfolgenden der entstehenden Integrale Differenzen gebildet werden und daß aus jeweils zwei aufeinanderfolgenden Differenzen die Summe gebildet wird.

Zur Vermeidung von Unbestimmtheiten kann hierbei vorgesehen sein, daß eine im vorangegangenen Bittakt ermittelte Summe zur Festlegung des Vorzeichens der Summe verwendet wird, wenn die Summe gleich Null ist.

Es ist außerdem vorteilhaft, wenn ferner aus den Differenzen zweier aufeinanderfolgender Integrale eine Differenz gebildet wird und daß aus der Differenz der Differenzen ein Qualitätssignal gebildet wird.

Eine andere Weiterbildung der Erfindung besteht darin, daß zur Korrektur eines in der Phasenregelschleife an sich möglichen 180°-Phasenfehlers aus den Summen Absolutbeträge gebildet werden, die mit einem mit doppeltem Bittakt alternierenden Vorzeichen akkumuliert werden und daß das Vorzeichen des akkumulierten Wertes als den 180°-Phasenfehler kennzeichnendes Signal abgegeben wird.

Eine vorteilhafte Anpassung des erfindungsgemäßen Demodulationsverfahrens an die Anwesenheit bzw. Abwesenheit von Verkehrsfunksignalen ist gemäß einer anderen Weiterbildung dadurch möglich, daß ferner zur Phasenregelung eines hilfsträgerfrequenten Taktsignals zwei orthogonale Komponenten des amplitudenbegrenzten hilfsträgerfrequenten Signals in Abtastwerte umgewandelt werden und daß die entstandenen Folgen von Abtastwerten daraufhin überprüft werden, ob in zwei Bittaktperioden in mindestens einer der Folgen kein Vorzeichenwechsel stattgefunden hat und daß zutreffendenfalls ein Signal abgeleitet wird, das ein überlagertes Verkehrsfunksignal anzeigt.

Bei einer vorteilhaften Ausgestaltung dieser Weiterbildung ist vorgesehen, daß ein Zähler in Abhängigkeit vom Vorliegen eines Vorzeichenwechsels inkrementiert oder dekrementiert wird, daß der Zähler mit einer beidseitigen Überlaufsperre versehen ist und daß die Größen der Inkremente und Dekremente vom Zählerstand abhängig sind, wobei eine Hysterese derart gebildet wird, daß bei einem guten Signal eine schnelle Entscheidung und bei Störungen eine große Trägheit gebildet wird.

Hierdurch wird erreicht, daß eine Änderung des Signals, das ein überlagertes Verkehrsfunksignal anzeigt, bei ungestörten empfangenen Signalen schnell erfolgt, während bei gestörten empfangenen Signalen eine Änderung nur mit einer großen Trägheit erfolgt. Dabei ist vorzugsweise vorgesehen, daß der Zähler drei stabile Lagen aufweist, nämlich die Mitte und die beiden Endlagen des Zählbereichs.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines erfindungsgemäßen Demodulators,
- Fig. 2: eine Schaltungsanordnung zum Integrieren und Auslesen und einen digitalen Bandpaß
- Fig. 3: einen Detektor für Verkehrsfunkinformationen und eine Schaltungsanordnung zur Phasenkorrektur,
- Fig. 4: eine Schaltungsanordnung zur Integration von Halbwellen sowie zur weiteren Verarbeitung des Ergebnisses der Integration,
- Fig. 5: eine Schaltungsanordnung zur Ableitung des Radio-Daten-Signals und eines Qualitätssignals,
- Fig. 6: Zeitdiagramme von bei den vorgenannten Schaltungsanordnungen benötigten Taktsignalen,
- Fig. 7: eine Schaltungsanordnung zur Takterzeugung,
- Fig. 8: ein Blockschaltbild eines weiteren erfindungsgemäßen Demodulators und
- Fig. 9: ein Blockschaltbild einer Schaltungsanordnung zum Integrieren und Auslesen.

Gleiche Teile sind in den Figuren mit gleichen Bezugszeichen versehen. Das mit ADD gekennzeichnete Symbol stellt einen seriellen Addierer dar, bestehend aus einem Volladdierer mit drei Eingängen A, B und CI (= Carry-in) und zwei Ausgängen S und CO (=Carry-out). Am Ausgang S tritt eine 1 auf, wenn A+B+CI ungerade ist. Am Ausgang CO tritt eine 1 auf, wenn A+B+CI > 1 ist. Ein weiterer Bestandteil des Addierers ist ein D-Flip-Flop, dessen Dateneingang D mit CO und dessen Ausgang Q mit CI verbunden sind. Als Takt wird dem D-Flip-Flop der gleiche Takt wie einem mit dem jeweiligen Addiererausgang verbundenen Schieberegister zugeführt. Vor einer Addition kann das Flip-Flop über Set oder Reset vorgesetzt werden, was in den Figuren mit c0 = ... gekennzeichnet ist.

Ferner sind in den Figuren Flip-Flops durch ihren Dateneingang D und mindestens einen Ausgang Q gekennzeichnet, während für die Darstellung von Schieberegistern SR, für Zähler CNT und für Integratoren INT verwendet wurden.

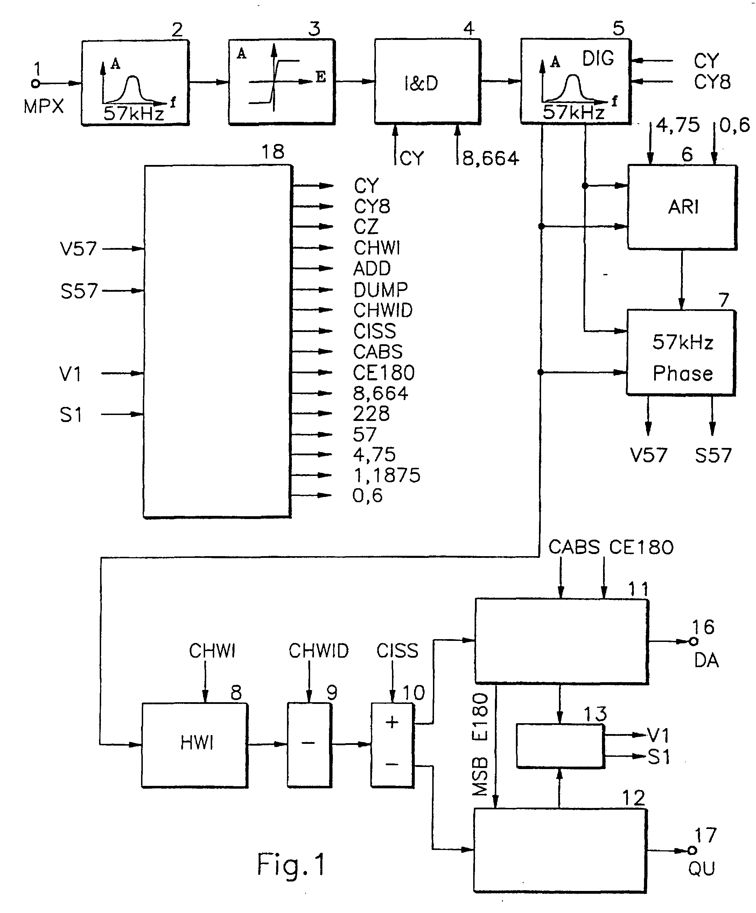

Dem in Fig. 1 dargestellten Ausführungsbeispiel eines erfindungsgemäßen RDS-Demodulators wird bei 1 ein empfangenes Multiplexsignal MPX zugeführt, das außer den Radio-Daten-Signalen noch ein Verkehrsfunksignal enthalten kann. Nach einer Filterung in einem 57-kHz-Bandpaß 2 wird die Amplitude des Multiplexsignals bei 3 begrenzt. Das entstandene binäre Signal steuert eine Schaltung 4 zum Integrieren und Auslesen (Integrate and dump) an, deren Ausgangssignal über einen digitalen Bandpaß 5 geleitet wird. Dieser hat zwei Ausgänge für die beiden orthogonalen Komponenten YC und YS des gefilterten 57-kHz-Signals Y.

Beide Komponenten werden einer Schaltung 6 zur Erkennung, ob Verkehrsfunksignale vorliegen, und einer Schaltung 7 zur Phasenkorrektur des 57-kHz-Signals zugeführt. Eine der Komponenten wird einer Schaltung zur Halbwellenintegration zugeleitet, von derem Ausgangssignal jeweils zwei um eine viertel Bittaktperiode, das heißt um 1/4,75 kHz, zeitversetzte Werte bei 9 subtrahiert werden. Aus diesen Werten HWID werden bei 10 die Summe ISS und die Differenz ISD gebildet.

Die Summe ISS dient in der Schaltung 11 dazu, das demodulierte Radio-Daten-Signal DA und ein Korrektursignal zu erzeugen, das einen 180°-Phasenfehler korrigiert. Die Differenz ISD wird einer Schaltung 12 zur Ableitung eines die Qualität bezeichnenden Signals zugeführt. In beiden Schaltungen 11 und 12 wird unter anderem das höchstwertige Bit MSB des Signals ISS bzw. ISD abgetrennt und einer Schaltung 13 zur Phasenregelung zugeleitet. In dieser Schaltung werden zwei Signale V1 und S1 erzeugt, wobei V1 eine Variation der Phase des 1,1875-kHz-Signals und S1 das Vorzeichen der Variation bedeuten. Das höchstwertige Bit der Summe ISS wird über eine Schaltung 14 zur Phasenauswahl geleitet, die von dem Korrektursignal gesteuert wird. Am Ausgang 16 steht das Radio-Daten-Signal DA zur Verfügung, während ein Qualitätssignal QU einem Ausgang 17 entnehmbar ist.

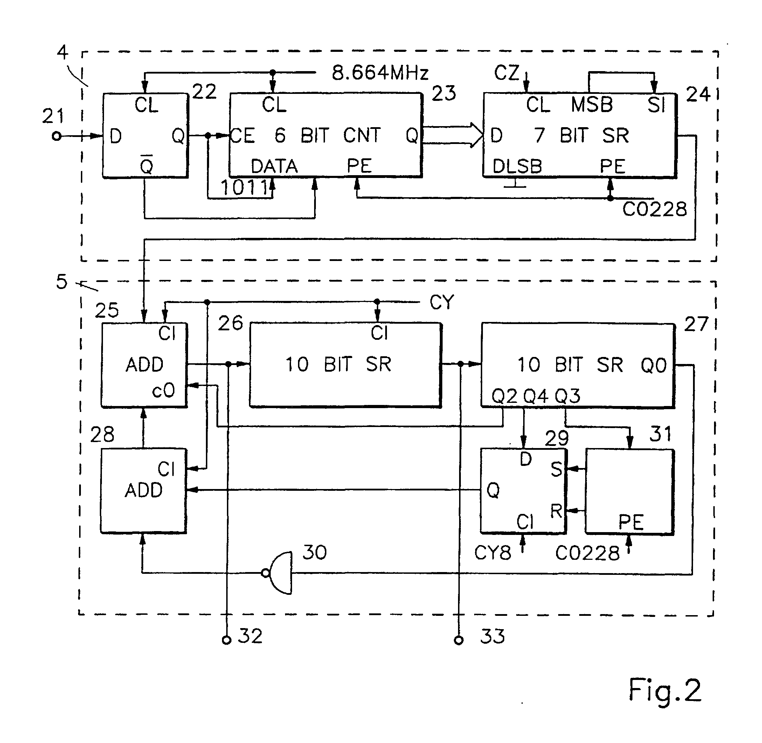

Ein Taktsignalgenerator 18 erzeugt für die einzelnen Schaltungen Taktsignale, die im Zusammenhang mit den Figuren 2 bis 7 näher erläutert werden. Von den Schaltungen 7 und 13 erzeugte Signale V57, S57, V1 und S1 steuern in dem Taktsignalgenerator 18 enthaltene Frequenzteiler.

Fig. 2 zeigt die Schaltungsanordnung 4 zum Integrieren und Auslesen und den digitalen Bandpaß 5 in gegenüber Fig. 1 detaillierterer Darstellung. Das binäre Signal wird einem Eingang 21 eines D-Flip-Flops 22 zugeführt, das mit einem Taktsignal der Frequenz 8,664 MHz getaktet wird. Ein Ausgang Q des D-Flip-Flops 22 ist mit einem Count-enable-Eingang CE eines 6-Bit-Zählers 23 verbunden, der ebenfalls mit der Frequenz von 8,664 MHz getaktet wird. Im Takt eines Taktsignals CZ mit der Frequenz von 228 kHz wird der Inhalt des Zählers 23 in ein 7-Bit-Schieberegister 24 übernommen. Dabei wird ein Taktimpuls unterdrückt bzw. ist unwirksam, während der 6-Bit-Zähler 23 neu auf ix-19 gesetzt wird. Dabei ist ix der zur Zeit des fehlenden Taktimpulses gültige Wert des binären Signals (0 oder 1). Der vom Schieberegister 24 übernommene Inhalt des 6-Bit-Zählers 23 wird um ein weiteres Bit ergänzt - nämlich das geringswertige Bit -, das beim Laden auf 0 gesetzt wird. Dieses ermöglicht die Verwendung eines gemeinsamen Taktsignals für dieses und die folgenden Schieberegister. Der serielle Dateneingang SI des Schieberegisters 24 ist mit dem MSB-Ausgang verbunden, so daß ein arithmetisches Shift-Right mit 10 Bit möglich ist.

Der digitale Bandpaß 5 wird von einem rekursiven Filter zweiter Ordnung gebildet mit der Funktion Y(n) = 2·X - 7/8 · Y(n-2) bei einer Taktfrequenz von 228 kHz. Dieses Filter hat eine Verstärkung von 16 bei 57 kHz. Das Eingangssignal des Filters wird mit 2 multipliziert, weil die letzten drei Bit im Filter wegen der Rundungsfehler für die Auswertung entfallen. Das Filter besteht aus einem Addierer 25, zwei als Verzögerungsschaltungen dienende Schieberegister 26, 27, einem weiteren Addierer 28, einem 1-Bit-Speicher 29 und einem Invertierer 30.

Der 1-Bit-Speicher 29 wird mit dem viertniedrigsten Bit vorgesetzt. An seinem Dateneingang liegt das fünftniedrigste Bit. Es folgen sechs Taktimpulse, so daß das höchstwertigste Bit im 1-Bit-Speicher 29 stehenbleibt. Der bei der Komplementbildung entstehende "Fehler" von -1 wird absichtlich nicht korrigiert, weil dadurch das Problem des Vorzeichens bei Werten Y=0 entfällt. Y=0 hat funktionell die Wertigkeit +0,5, während Y=-1 -0,5 entspricht. Damit fällt die funktionelle 0 exakt zusammen mit dem Sprung des höchstwertigen Bits, was für die 57-kHz-Phasenregelung vorteilhaft ist.

In den beiden Schieberegistern 26, 27 des Bandpasses 5 stehen nach Phasenregelung Mittelwerte der beiden orthogonalen Komponenten des 57-kHz-Signals an. Im 57-kHz-Takt gelesen können sie eindeutig den Radio-Daten-Signalen und gegebenenfalls den Verkehrsfunksignalen zugeordnet werden. Das höchstwertige Bit (Vorzeichen) beider Größen dient zur Phasenregelung und zur Verkehrsfunkerkennung. Aus der das Radio-Daten-Signal enthaltenen Komponente des 57-kHz-Signals wird eine 5-Bit-Zahl zur Radio-Daten-Demodulation verwendet.

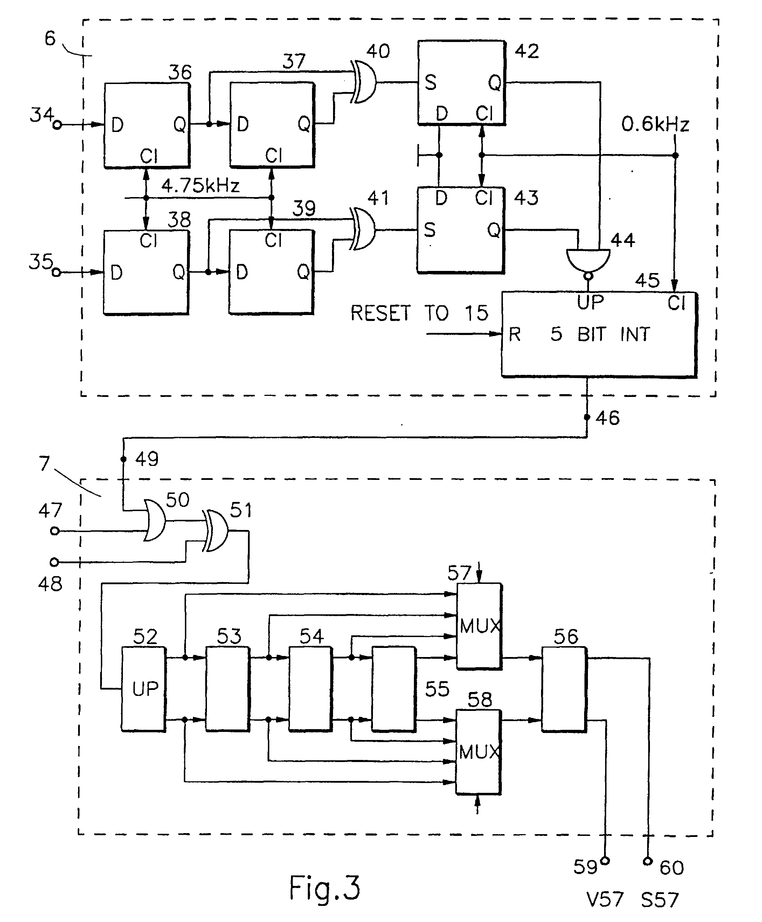

Der Schaltung 6 (Fig. 3) zur Erkennung von Verkehrsfunksignalen werden die beiden Komponenten des 57-kHz-Signals bei 34, 35 zugeführt. Sie werden über jeweils zwei D-Flip-Flops 36, 37; 38, 39 weitergeleitet, die mit einem 4,75-kHz-Signal getaktet werden. Die Eingangs- und Ausgangssignale der D-Flip-Flops 37, 39 werden jeweils einer Exklusiv-Oder-Schaltung 40, 41 zugeführt, welche bei einem Vorzeichenwechsel jeweils einen Impuls abgeben. Flip-Flops 42, 43 werden von diesen Impulsen gesetzt und von einem Taktsignal mit einer Frequenz von etwa 0,6 kHz rückgesetzt. Dadurch und durch die anschließende Nicht-Und-Schaltung 44 wird erkannt, wenn in zwei 1,1875-kHz-Perioden in mindestens einer der Komponenten kein Vorzeichenwechsel stattgefunden hat. In diesem Fall gilt die Anwesenheit von Verkehrsfunksignalen als wahrscheinlich. Deshalb wird ein anschließender 5-Bit-Integrator 45 inkrementiert und im anderen Fall dekrementiert. Der Integrator ist mit einer beidseitigen Überlaufsperre versehen. Die Größe der Inkremente und Dekremente hängt von der Zählrichtung und vom zweithöchsten Bit des Integrators 45 gemäß folgender Tabelle ab:

| Zählerstand | 0...7 | 8...15 | 16...23 | 24...31 |
|---|---|---|---|---|
| ja | +1 | +2 | +1 | +2 |
| nein | -2 | -1 | -2 | -1 |

Bei statistisch wechselnder Ja/Nein-Information hat der Integrator drei stabile Lagen, nämlich die Mitte und beide Endlagen, aus denen er nur bei deutlichem Überwiegen einer Information herauskommen kann. Diese Hysterese bewirkt eine schnelle Entscheidung bei gutem Signal und eine große Trägheit bei Störungen. Das höchstwertige Bit des Integrator-Inhalts stellt das Ausgangssignal dar und bedeutet, ob die Anwesenheit von Verkehrsfunksignalen erkannt wurde oder nicht. Es ist von einem Ausgang 46 abnehmbar.

Der ebenfalls in Fig. 3 dargestellten Schaltungsanordnung zur 57-kHz-Phasenkorrektur werden von dem digitalen Bandpaß 5 die höchstwertigen Bit beider Komponenten des 57-kHz-Signals und das Ausgangssignal der Schaltung 6 über Eingänge 47, 48, 49 zugeleitet. Nach Verknüpfung mit Hilfe einer Oder-Schaltung 50 und einer Exklusiv-Oder-Schaltung 51 steuern die Signale über einen Eingang UP einen 5-Bit-Zähler aus 1-Bit-Zählern 52 bis 56, die durch Über- und Unterlauf-Ausgänge miteinander verbunden sind. Nach jeweils einem Über- bzw. Unterlauf des gesamten Zählers wird der 5-Bit-Zähler auf die Mitte seines Zählbereichs gesetzt. Die Größe der Inkremente bzw. des Zählbereichs können Variable sein, um am Anfang eine schnelle Regelung und in einem stationären Betrieb eine größere Trägheit zu bewirken. Dazu können mit Multiplexern 57, 58 einzelne 1-Bit-Zähler unwirksam geschaltet werden. Über die mit Pfeilen angedeuteten Eingänge der Multiplexer 57, 58 werden geeignete Umschaltsignale zugeführt.

Nimmt das bei 49 zugeführte Signal ARI den Wert 1 an, wird nur eine Komponente zur Steuerung benutzt, die dabei automatisch zur RDS-Komponente wird, da die Phasenregelschleife die Phase so dreht, daß hier im Mittel 0 steht. Das entspricht einem Nulldurchgang des Trägersignals.

Im Falle ARI=0 wird die Exklusiv-Oder-Verknüpfung beider bei 47 und 48 zugeführter Komponenten zur Phasenregelung im Sinne einer Costas-loop benutzt. Durch geeignete Invertierung ist sichergestellt, daß die gleiche Komponente zur RDS-Komponente wird, wie im Falle ARI=1.

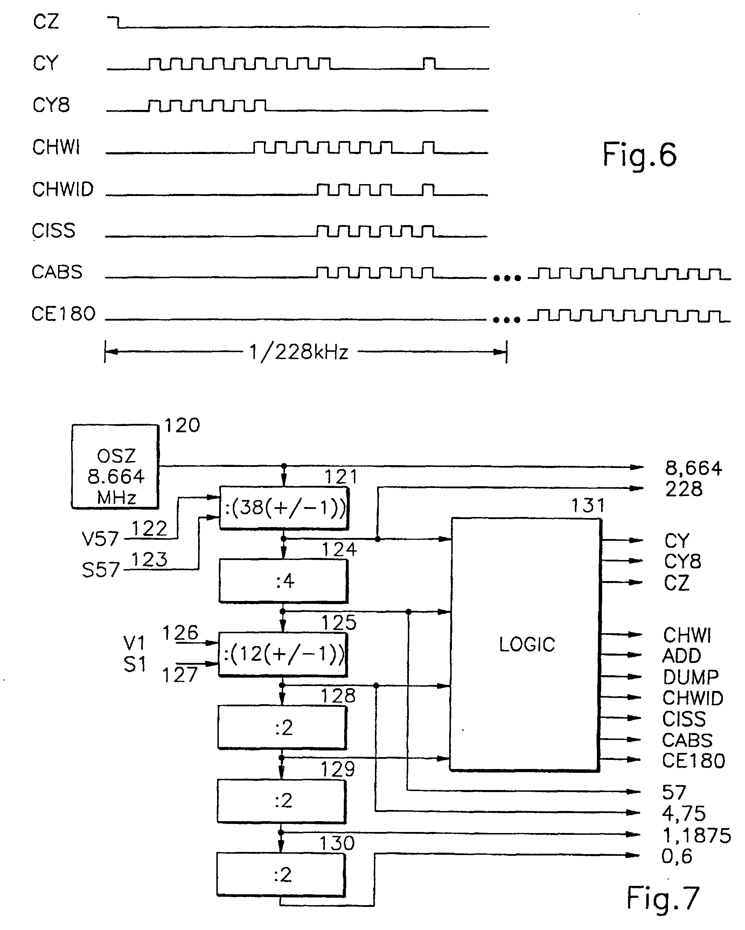

An Ausgängen 59, 60 der Schaltung 7 stehen dann Signale V57 und S57 zur Steuerung der Phasenlage des 57-kHz-Trägers zur Verfügung. Dabei bewirkt das Signal V57 im Falle des Wertes 1 eine Variation der Phase und tritt kurzzeitig bei einem Über- oder Unterlauf des Zählers 56 auf. Das Signal S57 stellt das Vorzeichen, das heißt die Richtung der Variation, dar und besteht aus dem jeweiligen Inhalt des Zählers 56. Die Signale V57 und S57 bewirken im 228-kHz-Generator (Fig. 7), daß die Taktfrequenz von 8,664 MHz einmal durch 37 bzw. 39 anstatt wie gewöhnlich durch 38 geteilt wird.

Für eine gute 1,1875-kHz-Phasenregelung und RDS-Demodulation wird unter anderem eine annähernd sinusförmige Bewertung der 57-kHz-RDS-Abtastwerte benötigt - und zwar für zwei verschiedene Phasen gleichzeitig. Es ist daher bei dem erfindungsgemäßen Demodulator vorgesehen, zunächst zwei um 90° versetzte Halbwellen-Integrale zu bilden, um daraus die gewünschten Funktionen zusammenzusetzen.

Da eine unterschiedliche und genügend fein gestufte Bewertung der 57-kHz-Abtastwerte eine Multiplikation erfordern würde, wird die Bewertung bei dem erfindungsgemäßen Demodulator durch unterschiedliche zeitliche Dichte der zur Integration verwendeten Abtastwerte erreicht. Dieses ist zulässig, weil die Werte sich im 57-kHz-Bandpaß in wenigen 57-kHz-Perioden nur wenig ändern Als höchste Abtastfrequenz (größte Dichte der Abtastwerte) wurde 57 kHz gewählt. Dadurch wird gegenüber einer Frequenz von 114 kHz, die auch möglich wäre, mindestens ein Bit in den für diese Operation erforderlichen Schaltungen erspart.

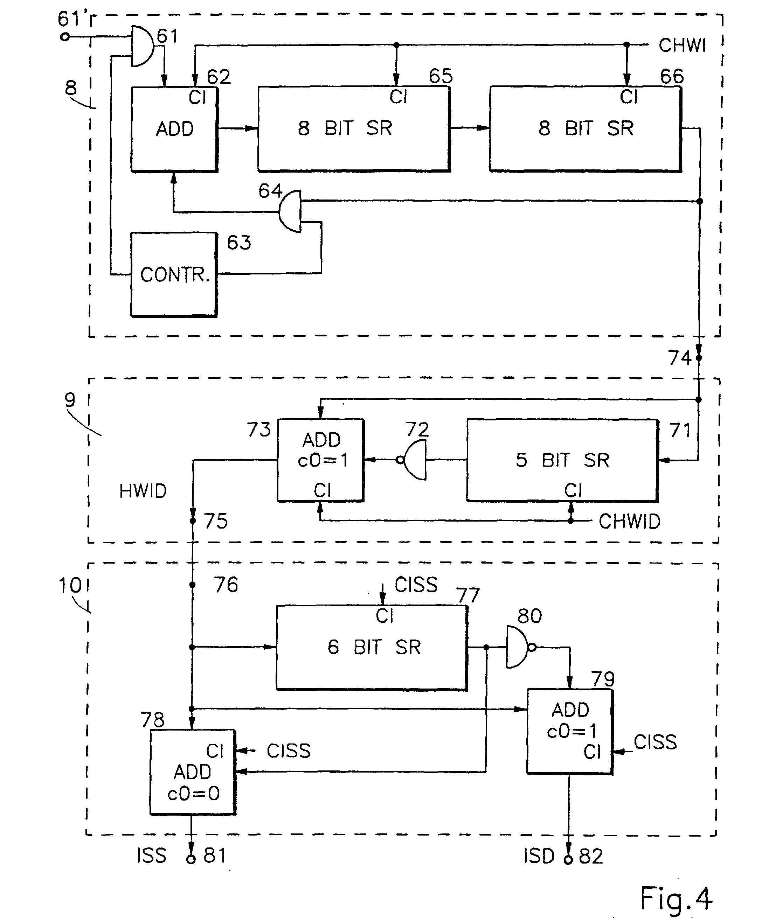

Dazu werden in der Schaltung 8, zu der Einzelheiten in Fig. 4 dargestellt sind, jeweils elf Abtastwerte Y einer Halbwelle des Bittaktsignals zu einem Halbwellenintegral HWI aufsummiert, wobei die fünf geringstwertigen Bits der einzelnen Abtastwerte Y weggelassen werden. Dazu dient eine Und-Schaltung 61, ein Addierer 62, eine weitere Und-Schaltung 64, welche gemeinsam von einer Steuerschaltung 63 gesteuert werden, und zwei 8-Bit-Schieberegister 65, 66. Die Abtastwerte Y werden einem Eingang 61' der Schaltung 8 zugeführt. Die Sinus- und Cosinus-Halbwellenintegrale SHWI und CHWI werden nach folgendem Prinzip gleichzeitig gebildet:

In einer 4,75-kHz-Periode zählt ein Zähler im Frequenzteiler 125 (Fig. 7) die 57-kHz-Perioden, wobei sich der Zählerstand zwischen 0 und 11 bewegt. Zwei 8-Bit-Worte (SHWI und CHWI) rotieren in einem 16-Bit-Schieberegister, das von dem Schieberegister 65, 66 gebildet wird und dessen Eingang die Addition der 5-Bit-Abtastwerte und auch das Löschen der rotierenden Werte (8 Bit) erlaubt. Beim Stand des Zählers im Frequenzteiler 125 (Fig. 7) von sechs erfolgt weder ein Schieben noch eine Addition, so daß diese Phase zur 1,1875-kHz-Phasenvariation benutzt werden kann.

In dem folgenden Diagramm bedeutet rot (r) eine Zirkulation der Daten um acht Bit. Bei den Zählerständen <3 und >8 ist ein Rotieren zwischen den Additionen erforderlich. In der mit s-c bezeichneten Zeile des Diagramms ist angegeben, welche Halbwelle (sinus oder cosinus) jeweils zur Addition verwendet wird. Die Zeile add zeigt mit einem a an, ob eine Addition erfolgt. In den Zeilen sin und cos zeigt ein * an, für welche Komponente die Addition erfolgt, während in der Zeile dump der Zeitpunkt angegeben ist, wann für das jeweilige Halbwellenintegral der entsprechende Wert entnommen wird. Der zugehörige Speicher im Schieberegister wird dann gelöscht.

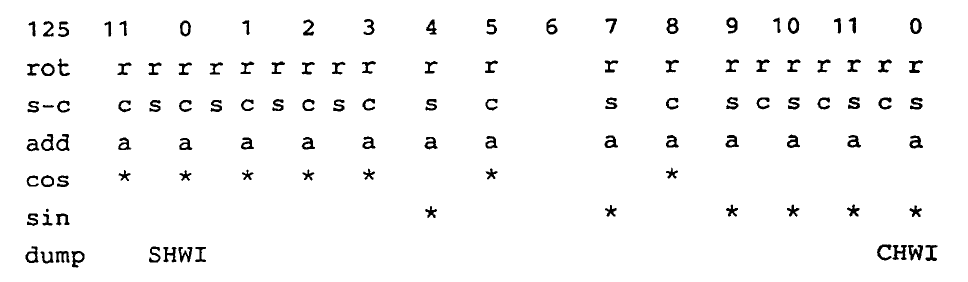

Von den derart gewonnenen Halbwellenintegralen HWI können die drei geringstwertigen Bits weggelassen werden. Rundungsfehler brauchen hier nicht korrigiert zu werden, da im folgenden nur Differenzen der Halbwellenintegrale HWI benutzt werden.

Zur Realisierung des Frequenzteilers 125 (Fig. 7) ist eine Kette aus einem 1/3- und einem 1/4-Frequenzteiler vorteilhaft, weil dadurch die Erzeugung des Taktes vereinfacht wird. Der 1/3-Teiler teilt bei Bedarf (V1=1) einmal durch zwei oder vier anstatt durch drei.

In der Schaltung 9 (Fig. 1 und Fig. 4) wird die Differenz je zweier aufeinanderfolgender Halbwellen-Integrale HWI im 4,75-kHz-Takt gebildet. Dazu ist ein 5-Bit-Schieberegister 71 vorgesehen, dessen Ausgang über einen Invertierer 72 mit einem Addierer 73 verbunden ist. Das bei 74 zugeführte Signal HWI gelangt einerseits in das Schieberegister 71 und andererseits zum Addierer 73. Ein Ausgang des Addierers bildet den Ausgang 75 der Schaltung 9, an welchem ein Signal HWID(n) = HWI(n) - HWI(n-1) ansteht. Bei Addierern dieser Art, welche die Anzahl der Bits erhöhen, ist sicherzustellen, daß beim letzten Taktimpuls - in diesem Fall beim sechsten - die höchstwertigen Bits beider Eingangssignale am Addierer anstehen. In der Schaltung 9 kann dieses dadurch erreicht werden, daß im Taktsignal CHWID für das Schieberegister 71 der jweils fünfte Impuls unterdrückt wird und so das höchstwertige Bit erst mit dem sechsten Impuls weitergeschoben wird.

In der Schaltung 10 (Fig. 1 und Fig. 4) werden die Summe und die Differenz je zweier aufeinanderfolgender Signalwerte HWID gebildet. Dieses erfolgt im 4,75-kHz-Takt mit einer Genauigkeit von 6 Bit. Einem Eingang 76 wird das Signal HWID zugeführt und gelangt in ein Schieberegister 77, dessen Ausgang mit einem Addierer 78 direkt und mit einem weiteren Addierer 79 über einen Invertierer 80 verbunden ist. Als weiteres Signal wird den Addierern 78, 79 das Signal HWID vom Eingang 76 zugeführt. Ein Ausgang 81 führt das Summensignal ISS und ein Ausgang 82 das Differenzsignal ISD, beide mit einer Bitbreite von 6, da sich bei diesen Additionen die Anzahl der Bits nicht erhöht. Das neu entstehende höchstwertige Bit ist nämlich gleich dem zweithöchsten Bit und kann daher weggelassen werden.

Bei dem Summensignal ISS gilt dieses exakt, da ISS(n) = HWID(n)+HWID(n-1) = HWI(n)-HWI(n-2) und beide HWI-Werte eine Breite von nur 5 Bit aufweisen. Im Falle des Differenzsignals ISD ist ein Überschreiten des 6-Bit-Raumes nur möglich bei starker Amplitudendemodulation (> 1,5 kHz) von Y, was jedoch infolge der vorgesehenen Bandbreiten unwahrscheinlich ist. Außerdem würde ein solcher Einzelfehler im Signal ISD lediglich zu einem einzelnen falschen Wert des Qualitätssignals führen, was tolerierbar ist.

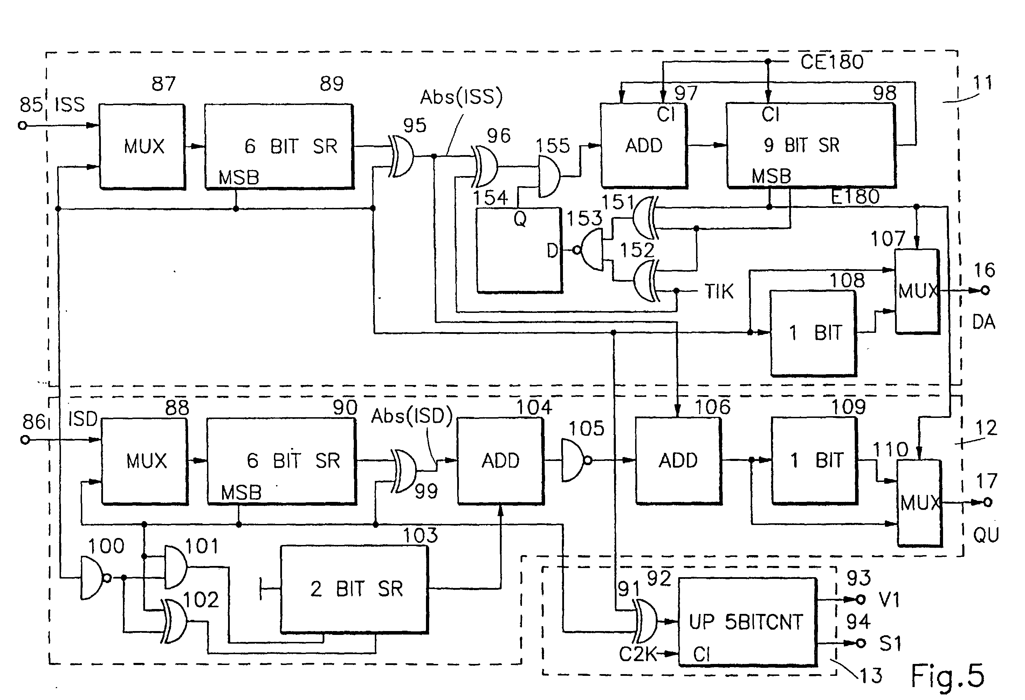

Das Signal ISS wird über den Ausgang 81 der Schaltung 11 (Fig. 5) zur Erkennung des 180°-Fehlers geleitet. Über den Ausgang 82 wird das Differenzsignal ISD der Schaltung 12 (Fig. 5) zur Ableitung eines Qualitätssignals zugeführt. Beide Schaltungen sind in Fig. 5 dargestellt und weisen nach dem Eingang 85, 86 je einen Multiplexer 87, 88 auf, an den sich ein 6-Bit-Schieberegister 89, 90 anschließt. Mit Hilfe dieser Schieberegister wird unter anderem das höchstwertige Bit MSB der Signale ISS und ISD abgetrennt und einer Schaltung 13 zur Phasenregelung des 1,1875 kHz-Taktes zugeleitet.

Die Schaltung 13 (Fig. 5) besteht aus einer Exklusiv-Oder-Schaltung 91, an die sich ein 5-Bit-Aufwärts/Abwärts-Zähler 92 anschließt, der mit einer Frequenz von 2,375 kHz getaktet wird. Im Falle einer 1 am Ausgang der Exklusiv-Oder-Schaltung 91 zählt der Zähler aufwärts, anderenfalls abwärts. Im Falle eines Überlaufs wird die Phase M12 = 6 im Frequenzteiler 125 (Fig. 7) einmal verdoppelt, nach einem Unterlauf wird sie einmal unterdrückt. Beim Einschalten und nach Über- bzw. Unterlauf wird der Inhalt des Zählers 92 auf die Mitte gesetzt. Zum schnelleren Einschwingen der Phase können die Größe oder die Inkremente wie im Falle der Schaltung 7 steuerbar sein. Ausgänge 93, 94 der Schaltung 13 führen Signale V1 und S1, wobei das Signal V1 eine Variation der Phase in einer von S1 gegebenen Richtung bewirkt. Die Ausgänge 93, 94 sind an die Eingänge 126, 127 des Frequenzteilers 125 (Fig. 7) angeschlossen.

Da die mit der Schaltung 13 bewirkte Phasenregelung des 1,1875 kHz-Taktes einen Phasenfehler von 180° gegenüber dem wahren RDS-Bittakt zuläßt, ist eine Entscheidung anhand der im 2,375-kHz-Takt gewonnenen Daten (ISS) erforderlich. Die Summe der Absolutbeträge von ISS ist bei den gültigen Daten größer als bei den dazwischenliegenden falschen Daten.

Daher werden im 2,375-kHz-Takt Absolutwerte des Summensignals ISS mit alternierendem Vorzeichen in einem Akkumulator addiert.

Bei der Erzeugung der Absolutwerte im 2,375-kHz-Takt erfolgt eine Zwischenspeicherung der Daten im Schieberegister 89 (Fig. 5), weil bereits zu Beginn der Additionen das höchstwertige Bit, das das Vorzeichen darstellt, bekannt sein muß. Das Schieberegister 89 wird zunächst mit ISS geladen. Dann wird das höchstwertige Bit MSB über den Multiplexer 87 an den Eingang des Schieberegisters 89 gelegt und die Addition kann beginnen. Die Absolutwerte Abs(ISS) stehen am Ausgang einer Exklusiv-Oder-Schaltung 95 an. Einer weiteren Exklusiv-Oder-Schaltung 96 wird außer den Absolutwerten ein Signal T1K zugeführt, das ein 1,1875-kHz-Rechtecksignal ist und das Alternieren bewirkt. Vor der Addition wird c0 auf MSB XOR T1K gesetzt.

Als Akkumulator dienen ein Addierer 97 und ein 8-Bit-Schieberegister 98. Der Akkumulator ist dadurch mit einer beidseitigen Überlaufsperre versehen, daß für den Akkumulatorinhalt E180 neun statt acht Bit verwendet werden, wobei im obersten Quadranten seines Zählbereiches die Addition und im untersten Quadranten die Subtraktion blockiert wird. Dazu dienen zwei Exklusiv-Oder-Schaltungen 151, 152, eine Nicht-Und-Schaltung 153, ein Flip-Flop 154 und eine Und-Schaltung 155.

Das höchstwertige Bit des Akkumulatorinhalts E180 besagt, welche der im 2,375-kHz-Takt gewonnenen Daten (das höchstwertige Bit von ISS) und der Qualitätssignale gültig sind und steuert dementsprechend einen Multiplexer 107, der das höchstwertige Bit des Signals ISS direkt oder um eine halbe RDS-Taktperiode mit Hilfe eines Flip-Flops 108 verzögert an den Ausgang 16 leitet.

Zur Gewinnung der Qualitätsinformation wird in der Schaltung 12 aus dem bei 86 zugeführten Differenzsignal ISD mit Hilfe des Multiplexers 88 und des Schieberegisters 90 sowie einer Exklusiv-Oder-Schaltung 99 der Absolutwert Abs(ISD) gebildet. Die weiteren Teile der Schaltung 13 realisieren die Funktion MSB(Abs(ISS)-Abs(ISD)-2). Jede der zur Addition gelangenden Größen hat einen Fehler von -1, wenn sie eine ungerade Anzahl von Invertierungen durchlaufen hat, das heißt, -1, wenn ISS negativ (MSB=1) und weitere -1, wenn ISD positiv ist. Statt der obengenannten 2 ist also eine Subtraktion von (1-MSB(ISS)+MSB(ISD)) erforderlich, was mit Hilfe eines Invertierers 100, einer Und-Schaltung 101, einer Exklusiv-Oder-Schaltung 102, einem 2-Bit-Schieberegister 103 und einem Addierer 104 erfolgt. Nach einer Invertierung des Ausgangssignals des Addierers 104 bei 105 wird in einem weiteren Addierer 106 der Absolutwert des Summensignals addiert. Ein Flip-Flop 109 und ein Multiplexer 110 dienen dazu, den 180°-Phasenfehler zu korrigieren. Das Qualitätssignal QU kann dem Ausgang 17 entnommen werden.

Fig. 6 zeigt einige ausgewählte Taktsignale als Spannungszeitdiagramme. In einer 228-kHz-Periode werden außer einem 0-Impuls (CZ) maximal 14 Taktimpulse benötigt, so daß eine Taktfrequenz von 4,332 MHz realisierbar ist. Die Taktsignale CZ, CY und CY8 werden mit einer Frequenz von 228 kHz wiederholt, das Signal CHWI mit einer Frequenz von maximal 114 kHz, die Taktsignale CHWID und CISS mit 4,75 kHz und die Taktsignale CABS und CE180 mit 2,375 kHz.

Fig. 7 zeigt ein Blockschaltbild des Taktsignalgenerators 18. Ein Oszillator 120 erzeugt eine Frequenz von 8,664 MHz, aus der durch einen Teiler 121 228 kHz erzeugt werden. Der Frequenzteiler 121 teilt normalerweise durch 38, was jedoch durch Signale V57 und S57 an Eingängen 122 und 123 um ±1 variiert werden kann.

Die Frequenz von 228 kHz wird in einem weiteren Frequenzteiler 124 durch vier geteilt, wodurch die Hilfsträgerfrequenz von 57 kHz entsteht. Daran schließt sich ein Frequenzteiler 125 an, dessen Teilerverhältnis über Eingänge 126, 127 mit Hilfe von Signalen V1 und S1 vom Normalwert 12 ausgehend um eins erhöht bzw. erniedrigt werden kann.

Drei weitere Frequenzteiler 128 bis 130 erzeugen aus der Ausgangsfrequenz von 4,75 kHz des Frequenzteilers 125 Frequenzen von 2,375 kHz, 1,1875 kHz und ca. 0,6 kHz. Ausgangssignale der Frequenzteiler 121, 124, 125 und 128 werden einer Logikschaltung 131 zugeführt, an deren Ausgängen die einzelnen Taktsignale entnehmbar sind. Außerdem dienen die durch ihre Frequenzen in Fig. 7 bezeichneten Signale ebenfalls als Taktsignale.

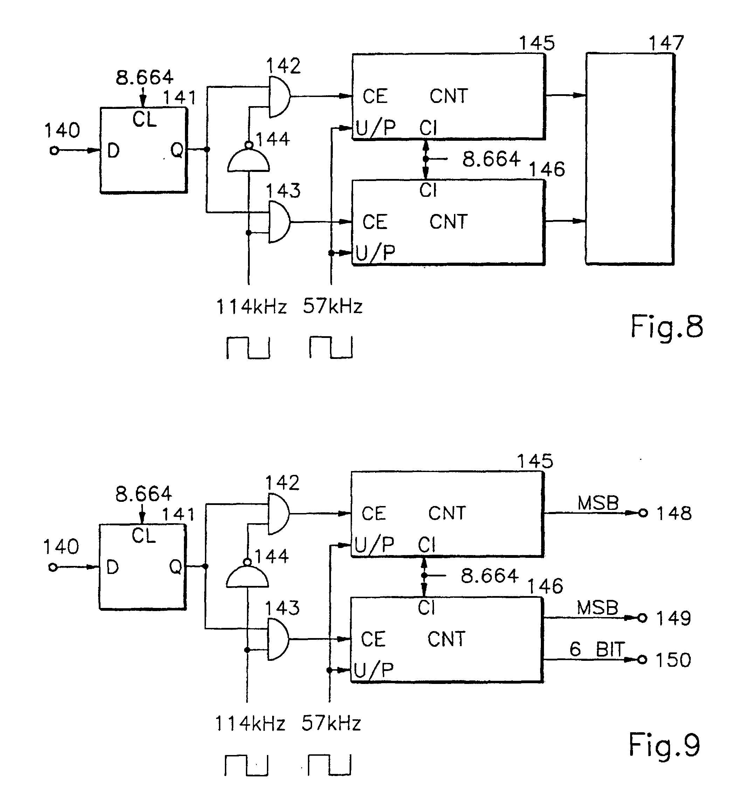

Bei dem in Fig. 8 dargestellten Ausführungsbeispiel wird das aus dem Multiplexsignal herausgefilterte und amplitudenbegrenzte hilfsträgerfrequente Radio-Daten-Signal einem Eingang 140 zugeleitet und mit Hilfe eines Flip-Flops 141 im Takt von 8,664 MHz abgetastet. Zwei Und-Schaltungen 142, 143 werden mit einem zugeführten mäanderförmigen 114-kHz-Signal angesteuert, wobei mit Hilfe eines Invertierers 144 die Und-Schaltung 142 entgegengesetzt zur Und-Schaltung 143 gesteuert wird.

Die Ausgänge der Und-Schaltungen 142, 143 sind mit "Count-enable"-Eingängen zweier Aufwärts/Abwärts-Zähler 145, 146 verbunden, so daß diese abwechselnd die Einsen (oder die Nullen) des Eingangssignals zählen. Den Zählern wird eine Taktfrequenz von 8,664 MHz zugeleitet. Außerdem werden die Zähler 145, 146 bezüglich ihrer Zählrichtung von einem zugeführten mäanderförmigen 57-kHz-Signal gesteuert. Ausgänge der Zähler sind mit Eingängen eines Mikroprozessors 147 verbunden.

Die Zähler 145, 146 erhalten abwechselnd je 38 Taktimpulse des 8,664-MHz-Taktsignals synchron zu dem 57-kHz-Raster. In den inaktiven Phasen, während der jeweils andere Zähler zählt, werden die Zähler im 57-kHz-Takt ausgewertet und neu gesetzt.

Insgesamt ergibt sich folgende zeitliche Abfolge, wobei n eine Ordnungszahl für eine 114-kHz-Taktperiode bedeutet:

| | | |
|---|---|---|
| n-1 | Zähler 146 zählt abwärts, | Zähler 145 auf 0 gesetzt |
| n-2 | Zähler 145 zählt abwärts | |
| n-1 | Zähler 146 zählt aufwärts | |
| n | Zähler 145 zählt aufwärts, | Zähler 146 Inhalt retten Zähler 146 auf 0 setzen |
| n-3 | s.o. | Datenausgabe (Interrupt) |

Auf diese Weise werden keine Addierwerke zur Differenzbildung benötigt.

Fig. 9 zeigt eine der Schaltungsanordnung nach Fig. 8 ähnliche Schaltungsanordnung, wobei die mit gleichen Bezugszeichen versehenen Bauteile die gleiche Funktion ausüben. Die Schaltungsanordnung nach Fig. 9 ist jedoch in erster Linie nicht für einen Mikroprozessor vorgesehen, sondern kann beispielsweise anstelle der Schaltungen 4 und 5 bei einem Demodulator nach Fig. 1 verwendet werden. Dem Eingang 140 wird dann das Ausgangssignal des Begrenzers 3 (Fig. 1) zugeführt, während von Ausgängen 148, 149 (Fig. 9) jeweils das höchstwertige Bit der im 57-kHz-Takt aus den Zählern 145, 146 ausgelesenen Signalen den Schaltungen 6 und 7 (Fig. 1) zugeführt wird. Ein aus dem Zähler 146 ausgelesener Wert der Breite von 6 Bit wird vom Ausgang 150 der Schaltung 8 (Fig. 1) zugeleitet.

Die Funktion des digitalen Bandpasses 5 wird bei der Schaltung nach Fig. 9 dadurch übernommen, daß die Zähler 145, 146 je nach dem Auslesen ihres Inhalts auf die Hälfte dieses Inhalts gesetzt werden. Dieses kann in einfacher Weise durch eine Shift-Funktion erfolgen, die bei Zählerbausteinen häufig vorgesehen, jedoch in Fig. 9 im einzelnen nicht dargestellt ist. Die Shift-Funktion ist mindestens im RDS-Kanal ohnehin zum seriellen Auslesen erforderlich.

## Patentansprüche

1. Verfahren zur Demodulation von Radio-Daten-Signalen, deren Übertragung durch Phasenumtastung eines unterdrückten Hilfsträgers erfolgt, wobei ein das hilfsträgerfrequente Signal enthaltendes Multiplexsignal über einen Bandpaß und einen Amplitudenbegrenzer geleitet wird, **dadurch gekennzeichnet, daß** das amplitudenbegrenzte trägerfrequente Signal in digitale Abtastwerte umgewandelt wird und daß die Abtastwerte mindestens einer Phasenregelschleife zur Ableitung eines Bittaktsignals zügeführt werden.

2. Demodulationsverfahren nach Anspruch 1, **dadurch gekennzeichnet, daß** die Umwandlung in Abtastwerte mit der Frequenz des Hilfsträgers erfolgt.

3. Demodulationsverfahren nach einem der Ansprüche 1 oder 2, **dadurch gekennzeichnet, daß** in der Phasenregelschleife mit vierfacher Frequenz des Bittaktes der Radio-Daten-Signale Integrale der Abtastwerte innerhalb jeweils einer Halbwelle des Bittaktsignals gebildet werden und daß die entstehenden Integrale zur Steuerung eines das Bittaktsignal aus einer höheren Frequenz ableitenden Frequenzteilers verwendet werden.

4. Demodulationsverfahren nach Anspruch 3, **dadurch gekennzeichnet, daß** bei der Integration eine Annäherung an eine bezüglich des Bittaktsignals sinusförmige Bewertung durch eine sich über jeweils eine Halbwelle des Bittaktsignals ändernde zeitliche Dichte der zur Integration verwendeten Abtastwerte erfolgt.

5. Demodulationsverfahren nach einem der Ansprüche 3 oder 4, **dadurch gekennzeichnet, daß** aus zwei zeitlich aufeinanderfolgenden der entstehenden Integrale Differenzen gebildet werden und daß aus jeweils zwei aufeinanderfolgenden Differenzen die Summe gebildet wird.

6. Demodulationsverfahren nach Anspruch 5, **dadurch gekennzeichnet, daß** eine im vorangegangenen Bittakt ermittelte Summe zur Festlegung des Vorzeichens der Summe verwendet wird, wenn die Summe gleich Null ist.

7. Demodulationsverfahren nach einem der Ansprüche 5 oder 6, **dadurch gekennzeichnet, daß** ferner aus den Differenzen zweier aufeinanderfolgender Integrale eine Differenz gebildet wird und daß aus der Differenz der Differenzen ein Qualitätssignal gebildet wird.

8. Demodulationsverfahren nach Anspruch 5, **dadurch gekennzeichnet, daß** zur Korrektur eines in der Phasenregelschleife an sich möglichen 180°-Phasenfehlers aus den Summen Absolutbeträge gebildet werden, die mit einem mit doppeltem Bittakt alternierenden Vorzeichen akkumuliert werden und daß das Vorzeichen des akkumulierten Wertes als den 180°-Phasenfehler kennzeichnendes Signal abgegeben wird.

9. Demodulationsverfahren nach einem der vorhergehenden Ansprüche, **dadurch gekennzeichnet, daß** ferner zur Phasenregelung eines hilfsträgerfrequenten Taktsignals zwei orthogonale Komponenten des ämplitudenbegrenzten hilfsträgerfrequenten Signals in Abtastwerte umgewandelt werden und daß die entstandenen Folgen von Abtastwerten daraufhin überprüft werden, ob in zwei Bittaktperioden in mindestens einer der Folgen kein Vorzeichenwechsel stattgefunden hat und daß zutreffendenfalls ein Signal abgeleitet wird, das ein überlagertes Verkehrsfunksignal anzeigt.

10. Demodulationsverfahren nach Anspruch 9, **dadurch gekennzeichnet, daß** ein Zähler in Abhängigkeit vom Vorliegen eines Vorzeichenwechsels inkrementiert oder dekrementiert wird, daß der Zähler mit einer beidseitigen Überlaufsperre versehen ist und daß die Größen der Inkremente und Dekremente vom Zählerstand abhängig sind, wobei eine Hysterese derart gebildet wird, daß bei einem guten Signal eine schnelle Entscheidung und bei Störungen eine große Trägheit gebildet wird.

11. Demodulationsverfahren nach Anspruch 10, **dadurch gekennzeichnet, daß** der Zähler drei stabile Lagen aufweist, nämlich die Mitte und die beiden Endlagen des Zählbereichs.

12. Demodulator für Radio-Daten-Signale, deren Übertragung durch Phasenumtastung eines unterdrückten Hilfsträgers erfolgt, wobei ein das hilfsträgerfrequente Signal enthaltendes Multiplexsignal (MPX) über einen Bandpaß (2) und einen Amplitudenbegrenzer (3) geleitet werden, **gekennzeichnet durch**
Mittel (3) zur Umwandlung des amplitudenbegrenzten trägerfrequenten Signals in digitale Abtastwerte und mindestens eine Phasenregelschleife (8, 9, 10, 11, 12, 13, 18), der die Abtastwerte zur Ableitung eines Bittaktsignals (1,1875) zugeführt sind.

## Claims

1. Method for demodulating radio data signals which are transmitted by phase-shift-keying a suppressed auxiliary carrier, a multiplex signal containing the signal with the auxiliary carrier frequency being conducted via a band-pass filter and an amplitude limiter, **characterized in that** the amplitude-limited carrier-frequency signal is converted into digital samples and that the samples are supplied to at least one phase-locked loop for extracting a bit clock signal.

2. Demodulation method according to Claim 1, **characterized in that** the conversion into samples takes place at the frequency of the auxiliary carrier.

3. Demodulation method according to either of Claims 1 and 2, **characterized in that**, in the phase-locked loop, integrals of the samples are formed at four times the frequency of the bit clock of the radio data signals within in each case one half wave of the bit clock signal, and that the integrals produced are used for controlling a frequency divider extracting the bit clock signal from a higher frequency.

4. Demodulation method according to Claim 3, **characterized in that**, during the integration, an approximation to a weighting, which is sinusoidal with respect to the bit clock signal, by a temporal density of the samples used for the integration, which changes over in each case one half wave of the bit clock signal, takes place.

5. Demodulation method according to either of Claims 3 and 4, **characterized in that** differences are formed from two temporally successive ones of the integrals produced, and that the sum is formed from in each case two successive differences.

6. Demodulation method according to Claim 5, **characterized in that** a sum determined in the preceding bit clock is used for establishing the sign of the sum if the sum is equal to zero.

7. Demodulation method according to either of Claims 5 and 6, **characterized in that**, furthermore, a difference is formed from the differences of two successive integrals, and that a quality signal is formed from the difference of the differences.

8. Demodulation method according to Claim 5, **characterized in that** absolute values which are accumulated with a sign alternating at twice the bit clock rate are formed from the sums for correcting a 180° phase error which is possible per se in the phase-locked loop, and that the sign of the accumulated value is output as the sign **characterizing** the 180° phase error.

9. Demodulation method according to one of the preceding claims, **characterized in that**, furthermore, two orthogonal components of the amplitude-limited signal at the frequency of the auxiliary carrier are converted into samples for controlling the phases of a clock signal with the frequency of the auxiliary carrier, and that the sequences of samples produced are checked to see whether no sign change has taken place in at least one of the sequences in two bit clock periods, and that, if it has, a signal is derived which indicates a superimposed traffic radio signal.

10. Demodulation method according to Claim 9, **characterized in that** a counter is incremented or decremented in dependence on the presence of a sign change, that the counter is provided with an overflow block at both ends, and that the magnitudes of the increments and decrements are dependent on the count, a hysteresis being formed in such a manner that a fast decision is formed with a good signal and a large inertia is formed in the case of disturbances.

11. Demodulation method according to Claim 10, **characterized in that** the counter has three stable positions, namely the centre and the two end positions of the counting range.

12. Demodulator for radio data signals, which are transmitted by phase-shift-keying of a suppressed auxiliary carrier, a multiplex signal (MPX) containing the signal at the frequency of the auxiliary carrier being conducted via a band-pass filter (2) and an amplitude limiter (3), **characterized by** means (3) for converting the amplitude-limited carrier-frequency signal into digital samples, and at least one phase-locked loop (8, 9, 10, 11, 12, 13, 18), which is supplied with the samples for extracting a bit clock signal (1, 1875).

## Revendications

1. Procédé de démodulation de signaux de données radio dont la transmission se fait par détection de phase d'une porteuse auxiliaire neutralisée, selon lequel un signal multiplex contenant le signal à la fréquence de la porteuse auxiliaire arrive dans un filtre à bande passante et dans un limiteur d'amplitude,
**caractérisé en ce que**
on convertit le signal limite en amplitude à la fréquence porteuse en valeur de détection numérique, et
on applique les valeurs de détection à au moins une boucle de régulation de phase pour déduire un signal d'horloge de bit.

2. Procédé de démodulation selon la revendication 1,
**caractérisé en ce qu'**
on effectue la conversion en valeur de détection à la fréquence de la porteuse auxiliaire.

3. Procédé de démodulation selon l'une des revendications 1 ou 2,
**caractérisé en ce que**
dans la boucle de régulation de phase avec une fréquence quadruple de l'horloge de bit des signaux de données radio on forme l'intégrale des valeurs de détection à l'intérieur d'une demi-onde du signal d'horloge de bit, et
on utilise les intégrales obtenues pour commander un diviseur de fréquence qui déduit le signal d'horloge de bit à partir d'une fréquence plus élevée.

4. Procédé de démodulation selon la revendication 3,
**caractérisé en ce que**
lors de l'intégration on effectue une approximation sur une évaluation sinusoïdale concernant le signal d'horloge de bit par une densité variable dans le temps sur chaque fois une demi-onde du signal d'horloge de bit des valeurs de détection utilisées pour l'intégration.

5. Procédé de démodulation selon l'une des revendications 3 ou 4,
**caractérisé en ce qu'**
à partir de deux intégrales successives dans le temps on forme les différences et à partir de chaque fois deux différences successives on forme la somme.

6. Procédé de démodulation selon la revendication 5,
**caractérisé en ce qu'**
on utilise une somme obtenue dans l'horloge de bit précédente pour fixer le signe algébrique de la somme si la somme est égale à 0.

7. Procédé de démodulation selon l'une des revendications 5 ou 6,
**caractérisé en ce qu'**
en plus à partir des différences de deux intégrales successives on forme une différence et à partir de la différence des différences on forme un signal de qualité.

8. Procédé de démodulation selon la revendication 5,
**caractérisé en ce que**
pour corriger une erreur de phase de 180° possible dans la boucle de régulation de phase, à partir des sommes on forme des valeurs absolues que l'on accumule avec un signe algébrique alternant au double de l'horloge de bit et on fournit le signe algébrique de la valeur accumulée comme signal caractérisant l'erreur de phase de 180°.

9. Procédé de démodulation selon une des revendications précédentes,
**caractérisé en ce qu'**
en plus pour la régulation de phase d'un signal d'horloge à la fréquence de la porteuse auxiliaire, deux composantes orthogonales du signal limite en amplitude à la fréquence de la porteuse auxiliaire, sont converties en valeur de détection, et
on vérifie les suites des valeurs de détection ainsi obtenues pour déterminer si dans deux périodes d'horloge de bit, dans au moins l'une des suites il n'y a pas eu de changement de signe algébrique, et le cas échéant on déduit un signal indiquant la présence d'un signal radio de circulation, combiné.

10. Procédé de démodulation selon la revendication 9,
**caractérisé en ce qu'**
on incrémente ou on décrémente un compteur suivant la présence d'une alternance de signe algébrique,
le compteur comporte une barrière de débordement des deux côtés,
l'amplitude des incréments et des décréments dépend de l'état du compteur,
on forme une hystérésis de sorte que pour un signal bon, on prend une décision rapidement et en cas de perturbation, on applique une inertie importante.

11. Procédé de démodulation selon la revendication 10,
**caractérisé en ce que**
le compteur présente trois états stables à savoir un état intermédiaire et deux états d'extrémité de la plage de comptage.

12. Démodulateur de signaux de données radio dont la transmission se fait par détection de phase d'une porteuse auxiliaire neutralisée, selon lequel on fait passer le signal multiplex MPX contenant le signal à la fréquence de la porteuse auxiliaire par une bande passante (2) et un limiteur d'amplitude (3),
**caractérisé par**
des moyens (3) pour convertir le signal limite en amplitude à la fréquence porteuse, en valeurs de détection numériques, et au moins une boucle de régulation de phase (8), (9), (10), (11), (12), (13) (18) qui reçoit les valeurs de détection pour en déduire un signal d'horloge de bit (1,1875 kHz).
